# EUROPEAN PATENT SPECIFICATION

(11) **EP 1 625 725 B1**
(45) Date of publication and mention of the grant of the patent: **09.01.2008**
(21) Application number: 04776020.2
(22) Date of filing: 13.05.2004
(51) Int. Cl.: H04L 29/06, H04L 12/56

(54) **METHOD FOR ADAPTING SERVICE LOCATION PLACEMENT BASED ON RECENT DATA RECEIVED FROM SERVICE NODES AND ACTIONS OF THE SERVICE LOCATION MANGER**
VERFAHREN ZUR ANPASSUNG DER DIENSTORTPLAZIERUNG AUF DER BASIS VON AUS DIENSTKNOTEN EMPFANGENEN NEUEREN DATEN UND AKTIONEN DES DIENSTORTSMANAGERS
PROCEDE D'ADAPTATION D'EMPLACEMENT DE SERVICES EN FONCTION DE DONNEES RECENTES RE UES A PARTIR DE NOEUDS DE SERVICES ET D'ACTIONS DU GESTIONNAIRE D'EMPLACEMENT DE SERVICES

(30) Priority: 19.05.2003 US 471851 P; 30.10.2003 US 698816
(43) Date of publication of application: 15.02.2006
(73) Proprietor: Hewlett-Packard Development Company, L.P., Houston, Texas 77070 (US)
(72) Inventor: COVELL, Michele, Palo Alto, California 94306 (US); ROY, Sumit, Menlo Park, California 94025 (US); ANKCORN, John, Palo Alto, California 94306 (US); APOSTOLOPOULOS, John, G., c/o Hewlett-Packard Company, Palo Alto, California 94304 (US); HARVILLE, Michael, Palo Alto, California 94306 (US); SHEN, Bo, Fremont, California 94539 (US); TAN, Wai-tian, Sunnyvale, California 94087 (US); WEE, Susie J,, Palo Alto, California 94303 (US)
(74) Representative: Schoppe, Fritz
(86) International application number: PCT/US2004/015361
(87) International publication number: WO 2004/105353

(56) References cited:
- US-A1- 2002 082 015
- US-A1- 2002 193 110
- MA W-Y ET AL: "Content Services Network: The architecture and Protocols" PROCEEDING OF THE WCW'01, 20 June 2001 (2001-06-20), page 1, XP002256667 BOSTON, MA
- ROY S ET AL: "APPLICATION LEVEL HAND-OFF SUPPORT FOR MOBILE MEDIA TRANSCODING SESSIONS" PROCEEDINGS OF THE 12TH. INTERNATIONAL WORKSHOP ON NETWORK AND OPERATING SYSTEMS SUPPORT FOR DIGITAL AUDIO AND VIDEO. NOSSDAV 2002. MIAMI, FL, MAY 12 - 14, 2002, PROCEEDINGS OF THE INTERNATIONAL WORKSHOP ON NETWORK AND OPERATING SYSTEM SUPPORT FOR DI, 12 May 2002 (2002-05-12), pages 95-104, XP001171542 ISBN: 1-58113-512-2
- MARCUS BRUNNET A.O.: "Requirements for QoS Signaling Protocols" DRAFT-BRUNNER-NSIS-REQ-00.TXT, November 2001 (2001-11), pages 1-27, XP015000386
- R. BAGRODIA, A.O.: "iMASH: Interactive Mobile Application Session Handoff" MOBISYS 2003, 8 May 2003 (2003-05-08), pages 1-14, XP002303521 SAN FRANCISO, CA, USA

## Description

### TECHNICAL FIELD

Embodiments of the present invention pertain to servicing and delivery of content over a network.

### BACKGROUND ART

The servicing of content for delivery over computer system networks facilitates the dissemination of content that is conveniently accessible and suitable for end user consumption. Typically, people locate desirable content sites (e.g., a video-based movie web page) during their web browsing forays with their desktop or laptop machines. These devices are well suited to the input (e.g., Uniform Resource Locators or search queries) and output (e.g., reliable, high-bandwidth connections) requirements associated with web browsing to locate and access available content Once such sites are located, web users may subsequently try to connect to them using mobile devices such as video-enabled personal digital assistants (PDAs) or cell phones.

To accommodate the diversity in user (client) devices, content providers have to be able to support a wide range of different bit rates (according to the bandwidth of the connection), video frame rates (according to the processing power available at the client device, which itself varies dynamically according to power management strategies employed by the dient device), video frame sizes (according to the display size available at the client device), or the like.

One way to address these problems is to endow the network with the ability to transcode media data as it is streamed, so that it arrives at a client device in a format that is tailored to the client device. In other words, processing is performed by the network on an input media content stream, so that an output content stream is produced with a different bit rate, video frame rate, video frame size, or other parameters, that makes the output content stream more suitable for consumption on the client device. This transcoding operation may be thought of as a service provided by the network. Inefficiencies such as the selection of a transcoding service to perform a service when the resources of the selected transcoding service are already taxed can degrade system performance.

Because of such inefficiencies, client devices may be required to wait. extended periods if a server is managing many separate request to perform content processing and transmitting task (e.g., the sending of media files to different requesting client devices). Moreover, a streaming media file can be very large thus adding to the time required to complete the requested processing on the content This can be frustrating to a client device user especially if he or she is trying to complete a project before an approaching deadline. Conventional content servicing and delivery systems do not provide the type of media processing and analysis performed within the network, that would allow content, modified content, or data derived from content available through the network, to be delivered to client devices most efficiently making the best use of system resources.

MA W-Y et al describes in "Content Services Network: The architecture and Protocols" Proceedings of the WCW01, 20 June 2001, pages 89-107 a "Content Services Network" (CSN) which provides for the possibility of requesting a content adaptation service from a CSN so that the content will be automatically adapted at the network edge before delivery to clients. The CSN comprises a plurality of application proxy servers (AP) hosting the software of value added services for content delivery, which provide computational resources to process content on behalf of content providers (content servers) or end-users (clients). Such application proxies have a variety of operational modes depending on how the service is performed. Further services distribution and management servers (SDM) are provided as well as redirection servers. The redirection server directs a service request to an application proxy server according to a number of attributes and measurements. The redirection service redirects requests which are sent to a CSN to one of the application proxy servers according to the locality, the server load and the type of service.

It is the object of the present invention to provide an improved method for service location management that allows content, modified content, or data derived from content available through a network, to be delivered to client devices most efficiently making the best use of system resources.

This object is achieved by a method according to claim 1.

### DISCLOSURE OF THE INVENTION

Embodiments of the present invention pertain to methods and systems for selecting media service providers. A type of service to be performed on an item of content is identified. The item of content is identified during a session with a client device. Information regarding current resource availability is received from a plurality of service providers. The information is ascertained from ongoing resource measurements. A service provider is selected from the plurality of service providers based on the information that is received. Information is provided for transferring the session to the service provider. The service provider performs the service on the item of content.

### BRIEF DESCRIPTION OF THE DRAWINGS

The accompanying drawings, which are incorporated in and form a part of this specification, illustrate embodiments of the invention and, together with the description, serve to explain the principles of the invention:
Figure 1 is a block diagram showing information flow in and out of a system for servicing and delivering content based on resource availability according to one embodiment of the present invention.
Figure 2 illustrates resource availability monitoring for service provider selection according to one embodiment of the present invention.
Figure 3A is a block diagram showing information flow in and out of a system for servicing and delivering content based on resource availability according to one embodiment of the present invention.
Figure 3B is a block diagram showing information flow in and out of a system for servicing and delivering content to a client device according to yet another embodiment of the present invention.
Figure 4 illustrates a method for servicing and delivering content based on resource availability according to one embodiment of the present invention.
Figure 5 illustrates a method for managing the servicing of content based on resource availability according to one embodiment of the present invention.

The drawings referred to in this description should not be understood as being drawn to scale except if specifically noted.

### BEST MODE FOR CARRYING OUT THE INVENTION

Reference will now be made in detail to various embodiments of the invention, examples of which are illustrated in the accompanying drawings. While the invention will be described in conjunction with these embodiments, it will be understood that they are not intended to limit the invention to these embodiments. Furthermore, in the following description of the present invention, numerous specific details are set forth in order to provide a thorough understanding of the present invention. In other instances, well-known methods, procedures, components, and circuits have not been described in detail as not to unnecessarily obscure aspects of the present invention.

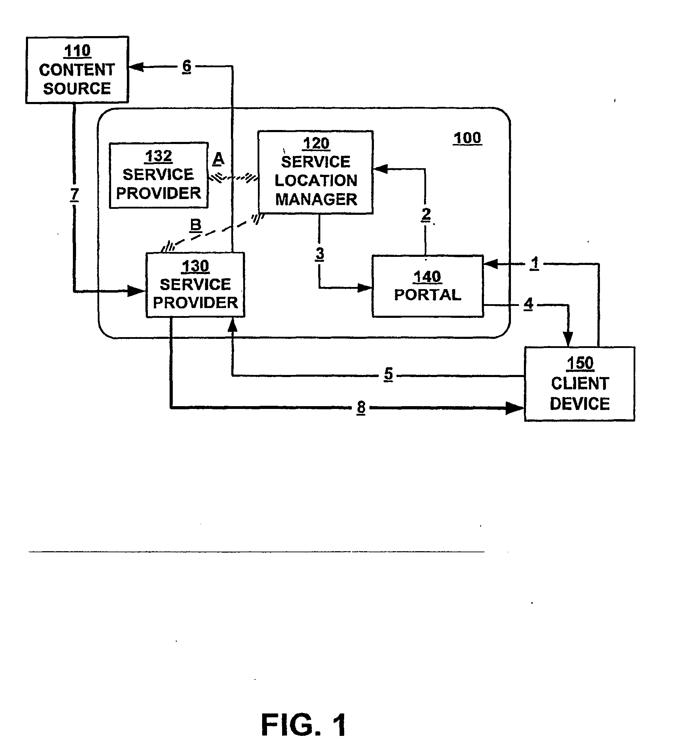

Figure 1 is a block diagram of a system 100 for servicing content supplied by a content source 110 and for delivering the service result content to a client device 150 according to one embodiment of the present invention. The selection of a service provider to service the content that is supplied by the content source 110 is made by a service location manager (SLM) 120. The selection made is based on dynamically collected resource measurements that are recently received by the SLM 120 that indicate the resource availability of service providers. The resource measurements that are received can include both poll-based and push-based data. According to one embodiment, the selection can be made based on a combination of poll-based and push-based data. This approach allows the SLM 120 to adapt its selection of a service location (e.g., service provider) to coincide with available resources. In the present embodiment, system 100 includes a service location manager (SLM) 120, a plurality of service providers exemplified by service providers 130 and 132, client device 150 and portal 140.

Service location manager (SLM) 120 can utilize both poll-based and push-based data gathering. Poll-based resource information gathering involves the transmission of requests to service providers (e.g., 130 and 132), by the SLM 120, as a means of eliciting information from the service providers regarding resource availability. Push-based information gathering involves the periodic "push" or transmission of information regarding resource availability to the SLM 120 by the service providers (e.g., 130 and 132). As mentioned above, a combination of both poll-based and push-based information gathering can be employed according to one embodiment.

Referring to Figure 1, messages A and B represent the resource monitoring communications that are transmitted or received by service location manager (SLM) 120. These messages are shown in Figure 1 by dashed double headed arrows A and B. These messages can constitute either a poll-based transmission of a request to a service provider, a push-based transmission of information regarding the resource availability of a service provider to the SLM 120, or a combination of both.

An approach that utilizes both types of information could involve: (1) the push by a service provider (e.g., 130 or 132) of information regarding resource availability to the SLM 120 in the same message that is used to notify the SLM 120 of the beginning and end of a session (stand alone updates could be transmitted if start-up/teardown session events did not occur often enough to satisfy the desired timing of statistics transmission), and (2) the SLM 120 could periodically poll the service providers (e.g., 130 and 132) when it is determined that statistics have not been received from the service providers (e.g., 130 and 132) in a predetermined period of time and could involve the restarting of daemons resident at the service providers to restart the periodic transmissions. It should be appreciated that the poll-based and the push-based information that is gathered can be combined at the SLM 120 with the recent history of service session dispatches to better predict the upcoming resource availability.

The service location manager (SLM) 120, the service providers 130 and 132, and the portal 140 are logical entities that can be implemented on a single device or using multiple devices. Thus, system 100 can be representative of, for example, a single computer system that implements the functionality of SLM 120, service providers 130 and 132, and portal 140. Alternatively, system 100 can encompass different nodes or devices in a computer system network. These nodes may be server computer systems, switches, routers or the like, having processing and memory capabilities sufficient to perform the various functionalities to be described herein. Generally speaking, the functionality provided by system 100 can be implemented using one or more devices. Furthermore, although system 100 is described for a single service location manager 120 and portal 140, there can be more than one of any of those elements. In addition, there can be more than two service providers.

System 100 can be implemented in an existing computer system network by overlaying the functionality of SLM 120, service providers 130 and 132, and/or portal 140 onto the existing network. That is to say, all or a part of the functionality provided by system 100 can be incorporated into existing network nodes. Alternatively, all or part of system 100 can be implemented by adding nodes into an existing network. For example, existing content sources and portals may be used, with nodes added for servicing content and for managing service providers.

In the present embodiment, system 100 can communicate with a content source 110 and a client device 150. Although described for a single content source 110 and client device 150, there can be more than one of each of those elements. Communication between system 100, content source 110 and client device 150, as well as communication within system 100, can be wireless.

Client device 150 can be virtually any kind of user device such as, but not limited to, a desktop or laptop computer system, or a video-enabled handheld computer system (e.g., a portable digital assistant) or cell phone. In general, client device 150 is used to request and subsequently receive an item of content.

An item of content refers to media or non-media data that can be live or recorded. An item of content can include, but is not limited to, video-based data, audio-based data, image-based data, web page-based data, graphic data, text-based data or some combination thereof. For example, an item of content can be a movie of digital video disk (DVD) quality.

A type of service may need to be performed on the item of content before the content is provided to client device 150. Types of services can include the processing of an item of content and/or the analysis of an item of content. For example, types of services can include video processing such as, but not limited to, transcoding, jitter removal, dynamic clipping based on facial recognition, video analysis, resizing of the video, optical character reading from video, background removal, and the like.

Additionally, types of services can include audio processing such as, but not limited to, background removal, audio enhancement, audio speed up or slow down, audio enhancement, noise reduction, speech recognition, audio analysis, and the like. The analysis of an item of content can include, for example, speech recognition that produces a text transcript, or optical character recognition applied to one or more video images of a video stream to produce a text output. A video-based person tracking service that outputs a stream of records of person location and times is another example that can be used to illustrate analysis of an item of content. The locations might be expressed in terms of image coordinates, but may be more useful when expressed in terms of physical world coordinates (e.g., "x,y" coordinates referenced to the floor of a room). Another example that can be used to illustrate an analysis of an item of content pertains to a face detector service that outputs snapshots of faces extracted from a video stream, the times and image locations at which the snapshots were detected, identities for the faces, and/or the classification of the faces. Some portion of this information can be represented as text data.

As used herein, an item of content may have been serviced, may be in the process of being serviced, may not be serviced, or may not yet be serviced. In other words, an item of content, whether serviced or not, can still be referred to as an item of content. Servicing of an item of content can include the analysis or processing of an item of content. When necessary for clarity of discussion, the result of servicing an item of content is referred to herein using terms such as "service result" or "service result content" or "service result data." Service result content may consist of: a modified version of the original serviced item of content (e.g., when background removal is applied to a video stream); an item of content that is derived from the original item of content (e.g., when optical character recognition is used to produce text output); an item of content that is passed through a service provider and is not modified but merely forwarded (e.g., content that does not require transcoding when received by a transcoding service provider); or an item of content that has been previously sent to a service provider and is now cached/stored on the service provider (e.g., content that was previously serviced and is now stored in memory at the service provider). Additionally, service result content may consist of any combination of the above examples.

Continuing with reference to Figure 1, service providers 130 and 132 each function to provide one or more types of service. That is, service providers 130 and 132 can each provide multiple and different types of services. For example, service provider 130 can be used for transcoding one item of content and for background removal of another item of content. Different types of services can be performed in parallel on different items of content. That is, service providers 130 and 132 can perform a service on different but concurrent content streams. Service providers 130 and 132 can also provide caching services. For example, service provider 130 or 132 can cache an item of content, in whole or in part, before the item of content is serviced by service provider 130 or 132. Similarly, service provider 130 or 132 can cache the service result, in whole or in part, before the service result content is forwarded to the client device 150.

Portal 140 is a well-published portal site that serves as the first point of contact between client device 150 and system 100. Content source 110 is the source of the item of content.

Service location manager (SLM) 120 selects a service provider (e.g., service provider 130 or 132) that can perform the type of service that may need to be performed on the item of content before the service result is provided to the client device 150. According to one embodiment, this selection can be made based on available service provider resources determined as described herein. Service providers 130 and 132, and any other available service providers, are known to SLM 120. The type or types of services that each service provider can perform, or can be made to perform, are also known to service location manager 120.

The manner in which SLM 120 selects a service provider is more fully described below. Operations in this process are represented by single headed arrows and correspond to messages 1-6 shown in Figure 1. The double headed arrows A and B shown in Figure 1 represent resource monitoring (e.g., poll-based and push-based) communications between the SLM 120 and the service providers (e.g., 130 and 132).

Again referring to Figure 1, at the beginning of a session, client device 150 sends message 1 to portal 140. Message 1 identifies a particular item of content (e.g., the name of a movie).

Also, in one embodiment, message 1 includes information sufficient for identifying a type of service that should be performed on the item of content before the service result is delivered to client device 150. That information can take many forms. In one form, message 1 specifically identifies a type of service (e.g., background removal or speech recognition). In another form, message 1 identifies attributes of client device 150, such as its memory capacity, screen size, processing capability and the like. Based on these attributes, system 100 (e.g., portal 140) can derive a type of service that should be performed (e.g., transcoding). In yet another form, message 1 identifies the type of client device 150, and based on stored knowledge of that type of device, system 100 (e.g., portal 140) can derive a type of service that should be performed (e.g., transcoding).

Message 1 can include other information. If the source of the item of content is known by client device 150, then the content source can also be identified in message 1. For example, message 1 can include the Uniform Resource Locator (URL) for content source 110. If the source of the item of content is not known to client device 150, the content source can be located by system 100 (e.g., by portal 140) if that information is not already known to system 100.

After receiving message 1, portal 140 sends message 2 to SLM 120. In one embodiment, message 2 includes information sufficient for identifying a type of service that should be performed on the item of content before the service result is delivered to client device 150. As just described, that information can take many forms. In one form, message 2 specifically identifies a type of service (e.g., background removal or speech recognition). In another form, message 2 identifies attributes of client device 150, such as its memory capacity, screen size, processing capability and the like. Based on these attributes, system 100 (e.g., SLM 120) can derive a type of service that should be performed (e.g., transcoding). In yet another form, message 2 identifies the type of client device 150, and based on stored knowledge of that type of device, system 100 (e.g., SLM 120) can derive a type of service that should be performed (e.g., transcoding). Based on the information provided by message 2, SLM 120 identifies the type of service to be performed.

Message 2 can include other information. For example, message 2 can also identify the item of content and/or the content source.

Service providers 130 and 132, and the services they are capable of providing, are known to SLM 120. Also known to the SLM 120 are certain static server provider and network characteristics, such as computational and memory resources of network coupled devices, connectivity and expected bandwidth and latency between servers, client/content addresses, session dispatch history, and network proximity. In addition, according to some embodiments the identity of special purpose hardware (e.g., encryption or compression) used by the service provider will be known, allowing the SLM 120 to take into account static characteristics of the special purpose hardware in its selection of suitable service providers. Moreover, the SLM may receive periodic transmissions of service session information from service providers 130 and 132. This information may come in the form of service session start-up and tear-down information (e.g., service session initiation and termination information).

It should be appreciated that a combination of some or all of the service provider and network characteristics and service session information described using static information and dynamic measurements can be employed by the SLM in the selection of a service provider. It should be appreciated that using this information SLM 120 selects either service provider 130 or 132 (or other coupled service providers) to perform the service identified from message 2.

According to one embodiment, SLM 120 selects either service provider 130 or 132 at based on their suitability (in terms of determined resource availability) to provide a particular service. In one embodiment, service location manager 120 selects either service provider 130 or 132 at random. In another embodiment, SLM 120 selects either service provider 130 or 132 using a scheme such as a round-robin scheme.

In yet another embodiment, SLM 120 maintains a history or record of service providers which are servicing other sessions already in progress. That is, as mentioned previously, there can be multiple client devices, each participating in a session (e.g., each requesting an item of content). For those other sessions in which the item of content is being serviced, SLM 120 will have selected a service provider to perform the service. In the present embodiment, SLM 120 maintains a record of the service providers that were selected to provide services for those other sessions. Based on the information in the record, SLM 120 can select a service provider for the new session with client device 150. For example, based on the information in the record, SLM 120 can assess which service providers are busiest relative to the other service providers. The record can be updated by SLM 120 using a variety of approaches to be described further below.

In the example of Figure 1, SLM 120 selects service provider 130. SLM 120 then sends message 3 to portal 140. Message 3 includes information sufficient for locating and contacting service provider 130. For example, message 3 can include the URL for service provider 130.

Message 3 can include other information. For example, message 3 can also identify the item of content and/or the content source.

After receiving message 3, portal 140 sends message 4 to client device 150. Message 4 includes the information for locating and contacting service provider 130 that was provided by message 3. Message 4 can be identical to message 3 (message 4 may simply be a forwarding of message 3). However, message 4 can include other (additional) information added by portal 140. For example, message 4 can also identify the item of content and/or the content source if that information is determined by portal 140 instead of service location manager 120.

In an alternate embodiment, in lieu of messages 3 and 4, SLM 120 sends a message directly to client device 150. The message from SLM 120 to client device 150 includes the information for locating and contacting service provider 130. The message can include other information such as the identity of the item of content and/or the content source.

In any case, client device 150 receives a message that includes information sufficient for locating and contacting service provider 130. Based on that information, communication is established between client device 150 and the service provider 130. In other words, the session initiated by client device 150 is automatically transferred from portal 140 to service provider 130. Importantly, the transfer from portal 140 to service provider 130 is seamless and transparent to an end user at client device 150.

In one embodiment, the message received by client device 150 (e.g., message 4) uses or is based on Synchronized Multimedia Integration Language (SMIL). Redirection of client device 150 from portal 140 to service provider 130 can be accomplished using dynamic SMIL rewriting.

Continuing with the example in view of Figure 1, after receiving message 4 from portal 140 (or an equivalent message from SLM 120), client device 150 sends message 5 to service provider 130. Message 5 identifies the item of content and the type of service to be performed by service provider 120. Message 5 can include other information. For example, if the content source is known at this point to client device 150, that information can be included in message 5.

Upon receiving message 5, service provider 130 sends message 6 to content source 110. As mentioned above, content source 110 can be identified to service provider 130 in message 5. Otherwise, service provider 130 can locate content source 110. In message 6, service provider 130 requests that the item of content be provided.

In response to message 6, content source 110 sends the item of content to service provider 130 for servicing (illustrated by arrow 7 in Figure 1). In one embodiment, the item of content is streamed to service provider 130.

In one embodiment, service provider 130 is always set up and ready to execute the specified service. That is, the specified service can be continuously executing on service provider 130, waiting for data to operate on. In another embodiment, the specified service is quiescent until either message 5 or the item of content is received by service provider 130. That is, service provider 130 may need to set up or start up the specified service, and will not do so until the potential need for the service is identified or until there is an actual need to perform the service.

In any case, service provider 130 can then perform the specified service on the item of content. The item of content can be cached by service provider 130 in whole or in pact before servicing, or the item of content can be serviced as it is serviced as it is received by service provider 130.

The service result content is then sent by service provider 130 to client device 150 (illustrated by arrow 8 in Figure 1). In one embodiment, the service result content is streamed to client device 150. The service result content can be cached by service provider 130 in whole or in part after servicing (before streaming), or the service result content can be streamed as it is serviced by service provider 130.

Once the service result content has been delivered by the selected service provider (e.g., service provider 130) and received by client device 150, the ongoing session can be terminated. In an embodiment in which a history or record is maintained by SLM 120, the history or record can be updated to reflect that the service provider 130 has completed its servicing tasks. Different approaches can be used to prompt an update of the record. In one approach, at or around the time that the SLM 120 is making a selection of a service provider, the SLM 120 estimates the amount of time needed to complete the service to be performed on the item of content. The record can be updated to reflect that the service has been completed when that amount of time has passed.

Alternatively, the selected service provider (e.g., service provider 130) can provide an indication to the SLM 120 when it has completed a service, and the record can be updated accordingly. These approaches can be extended to account for the delivery of the service result content to client device 150. For example, the amount of time estimated by the SLM 120 for service provider 130 to perform the service can be increased to account for any additional time needed by service provider 130 to send the service result content to client device 150. Similarly, service provider 130 can indicate to SLM 120 when it has completed sending the service result content to client device 150.

In the discussion above, the item of content is sent to service provider 130 in response to message 6. As mentioned previously herein, service provider 130 can instead store or cache content previously received and/or serviced, obviating the use of message 6 and the response to message 6 (e.g., obviating the data flow indicated by arrow 7 in Figure 1).

In overview, a client device 150 seeking a service contacts system 100 (e.g., portal 140). The client device 150 is redirected to a provider of the service (e.g., service provider 130). Content from a content source (e.g., content source 110) is sent (e.g., streamed) to the client device via the service provider. Thus, in one embodiment, system 100 is for streaming media from a content source to a client device.

For purposes of the present application, streaming media as used herein means data that is communicated between network nodes in a continual manner. Examples include streaming audio and video, which may have strict time constraints on delivery. In these examples, if portions of these streams are delivered too late, the portions will be ignored due to tardiness (they are too late to effect what is being played by the client application and are therefore largely useless). Alternately, if portions of these streams are delivered too early, they will be lost due to buffer constraints within the service or client application. Other examples of data that is transmitted in a continual manner include streams of measurements or streams of experimental results. These types of streams include weather readings from remote sensors and temperature readings from cooling systems. In these examples, there are no strict time constraints on the delivery; however, the data transmission has a temporal component that is best served by seamlessly ongoing transmissions.

As such, by using streaming media, the effect of service placement has a long-lived effect on resources of both the network and the server nodes. : For example, in transcoding a movie for viewing under streaming conditions, the data will span as much as two hours and therefore the transcoding session may span as much as two hours of the server time. For other types of streaming (e.g., instrument readings), the duration of the stream and of the service being done on the stream can be never-ending. The computational resources of the server node are effected for long periods of time with uncertain durations. Similarly, the network resources at the server node, on all the links between the server and the content provider, and between the server and the client machine, will be effected for long periods of time with uncertain durations. This is in marked contrast to more classic network transactions in which the data transfer is done in a block, often in less terms of seconds or minutes and in which the service performed on that data has a constrained duration.

In an embodiment that deals with streaming media, the following are some of the issues that need to be considered; that is, in comparison to web-based distribution, and web-based business transactions and/or downloads, streaming media has the following characteristics that need to be addressed:
a large amount of data - the end point of the data may not be known, and caching a number of items of content can consume significant memory resources; time-ordered data - the temporal order in which data is received can be important; access may not be carried through to completion - for example, only some portion of an item of content may be accessed (e.g., the first couple of minutes of a full-length movie); bandwidth needed cannot be determined without some degree of understanding of the subject media - for example, one video file may be at a high spatial resolution, and another video file may not, and so while the files, both being video files, may appear to be the same, their respective bandwidth may be quite different; jitter in latency or bandwidth can be problematic - a consistent latency may be acceptable, but latency that varies considerably during a session can be problematic because of buffer overflow or underflow; inadequate computation or bandwidth resources can make results useless due to time constraints; data is typically encoded (compressed), and so loss or lateness of some part of the data can have consequences on subsequent data decoding (decompression); lost data is not typically retransmitted due to time constraints; and a record of state should be maintained for all client devices - for streaming media, the streaming node needs to continue streaming data, and cannot wait to receive state information from clients. The result of these differences is to greatly increase the need for management and monitoring of services performed on streaming media.

### Resource Monitoring for Service Provider Selection

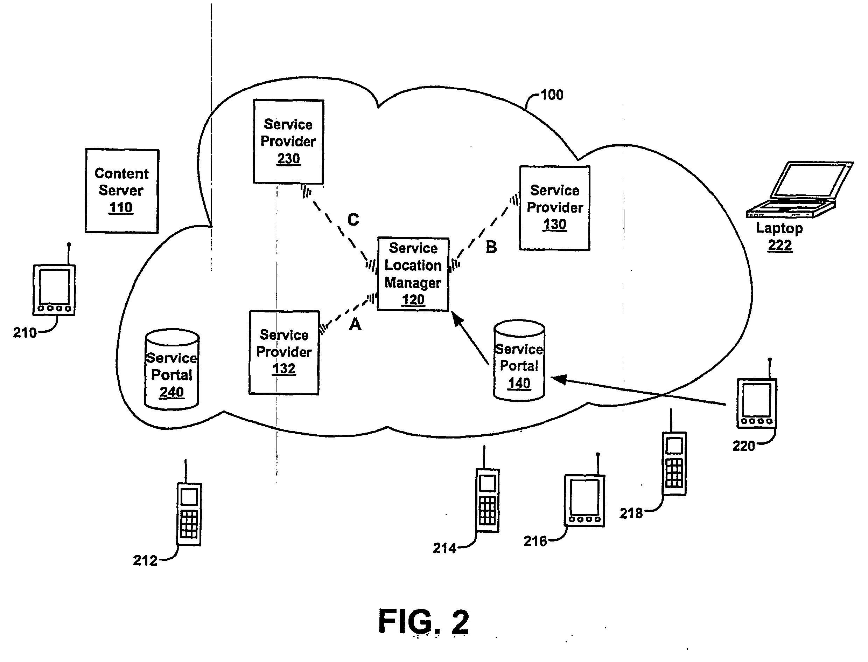

Figure 2 illustrates resource availability monitoring for service provider selection according to one embodiment of the present invention. According to one embodiment of the present invention, the service location manager (SLM) 120 examines the resource availability status of each of the media service providers (e.g., 130, 132 and 230) that is under its control to determine which service provider will be selected to perform the media service task required by the current client request. There are various ways that this examination can be completed. The following discussion describes different resource monitoring approaches that may be implemented in accordance with the present invention. Figure 2 shows service location manager (SLM) 120, service providers 130, 132, and 230, network 100, service portals 140 and 240, content source 110, and client devices 210, 212, 214, 216, 218, 220, and 222.

Referring to Figure 2, messages A, B and C represent the resource monitoring communications that are transmitted or received by service location manager (SLM) 120. These messages are represented in Figure 2 by dashed double headed arrows A, B and C. These messages can constitute either a poll-based transmission of a request to a service provider, a push-based transmission of information regarding the resource availability of a service provider to the SLM 120, or a combination of both.

### Poll-Based Resource Monitoring

According to one embodiment, monitoring the resource availability status of media service providers (e.g., 130, 132 and 230) that are controlled by SLM 120 can be "poll-based." According to this approach, whenever the SLM 120 gets a new client (e.g., 210, 212, 214, 216, 220, etc.) request for media services, it actively contacts each of the service providers that may have adequate resources (e.g., in terms of number and clock speeds of its CPUs, its installed memory, and its best-case network bandwidth) to determine resource availability (e.g., message A, B, or C). In response to this "resource poll", each service provider (e.g., 130, 132, and 230) provides a description of its currently available resources (e.g., message A, B, or C). This may include the number of available compute cycles and the amount of memory that is available at a given point in time. Ideally, the response would also include some estimate of the network bandwidth that is available to the content source 110 and to the client (e.g., 210, 212, 214, 216, 220 etc.). The SLM 120 can then collect this information and use it as a basis for selecting the appropriate service provider to perform the requested task. According to one embodiment, the SLM 120 selects the service provider (e.g., 130, 132, and 230) that provides the best combination of available network-bandwidth, and computational and memory resources.

The "poll-based" approach has the advantage of providing up-to-date snapshots of available service provider (e.g., 130, 132, and 230) resources. It also provides a clear indication of when a service provider (e.g., 130, 132, and 230) is out of service, either due to a network or machine failure.

### Push-Based Resource monitoring

According to one embodiment, resource information may be "pushed" from the service providers (e.g., 130, 132, and 230) to the monitoring SLM 120'. According to this embodiment, updates (e.g., messages A, B, or C) are provided on a periodic basis by a service-location supervisor (SLS), that may be implemented as a background daemon running on each media service provider (not shown). According to one embodiment, the background daemon may be implemented using system and network management software. In other embodiments, other implementations may be utilized.

For each client request, the SLM 120 accesses an available-resource database that is created from the collection (and the dating) of the SLS-provided information. This reduces the connection requirements incurred from resource monitoring from a quadratic to a linear dependence on the number of media service providers that are transmitting (e.g., pushing) information regarding available resources.

According to one embodiment, monitoring and "re-launch" capabilities may be imparted to the SLM 120 itself. This would involve the use of an SLM 120 daemon to monitor the timestamps of the latest SLS database refreshes and attempt to contact SLS machines that are out-of-touch for more than some preset time interval. In some instances, these contact attempts can fail, due to for example, an ongoing network or media service provider failure. However, since such attempts to re-launch the SLS contact would be done asynchronously, according to exemplary embodiments, they will not affect the response time of the SLM 120 to client requests.

### Enhanced Push-Based Monitoring

According to one embodiment, the push-based monitoring approach can be modified to reduce the likelihood of the communication by service providers of out-of-date information to the SLM 120. This can be done by having the SLM 120 maintain a short-term record of the media service providers to which it has dispatched recent client tasks. The SLM 120 can then adjust its prediction of resource availability for new jobs accordingly. For example, when a media service task is dispatched to a media service provider less than 1 minute before the resource statistics where last transmitted from that service provider, the resource record of that service provider would be lowered by the resource budget requested by that previously dispatched media service job.

As previously discussed, the selection of a service provider can be made based on a combination of poll-based and push-based data. By using both types of data a more complete picture of available resources may be ascertained. This approach allows the service location manager to adapt its selection of a service location (e.g., service provider) to more closely coincide with available resources.

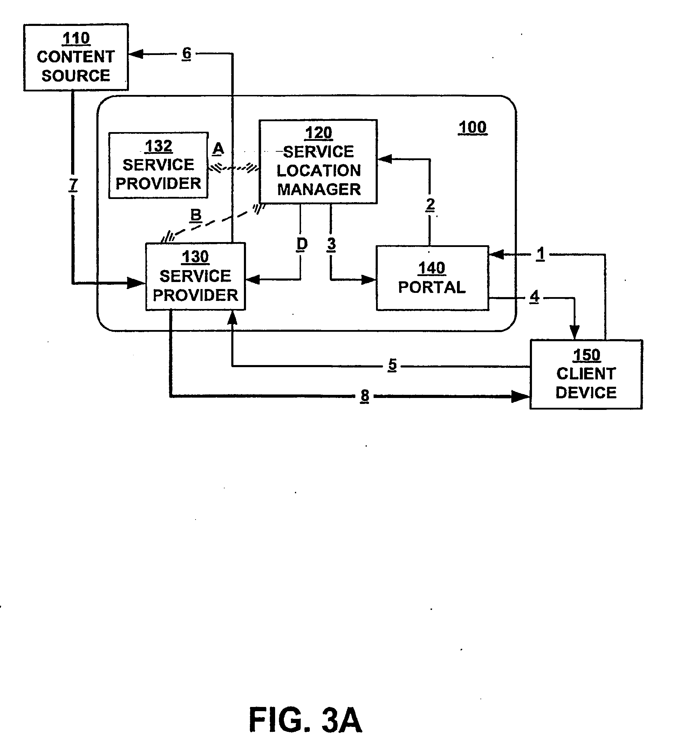

Figure 3A is a block diagram showing information flow in and out of system 100 according to another embodiment of the present invention. A difference between Figure 1 and Figure 3A is the addition of message D from service location manager (SLM) 120 to the selected service provider (e.g., service provider 130). The message D can be sent from service location manager 120 to service provider 130 at any time after message 2 and before message 5.

Message D can be used for any number of different purposes. For example, in a situation in which the type of service to be performed on the specified item of content is not continuously executing on service provider 130, message D can be used to alert service provider 130 to the approaching need for the service. Consequently, the set up and/or start up of the service can be initiated and perhaps completed before message 5 is received from client device 150, reducing overall latency.

Also, message D can be used to provide to service provider 130 the identity of the item of content and perhaps the identity of the content source 110. With this information, service provider 130 can request content source 110 to provide (e.g., begin streaming) the item of content before message 5 is received, further contributing to a reduction in latency. In addition, the use of message D in this manner can result in improved security, because the content source 110 does not have to be identified to the client device 150, for example.

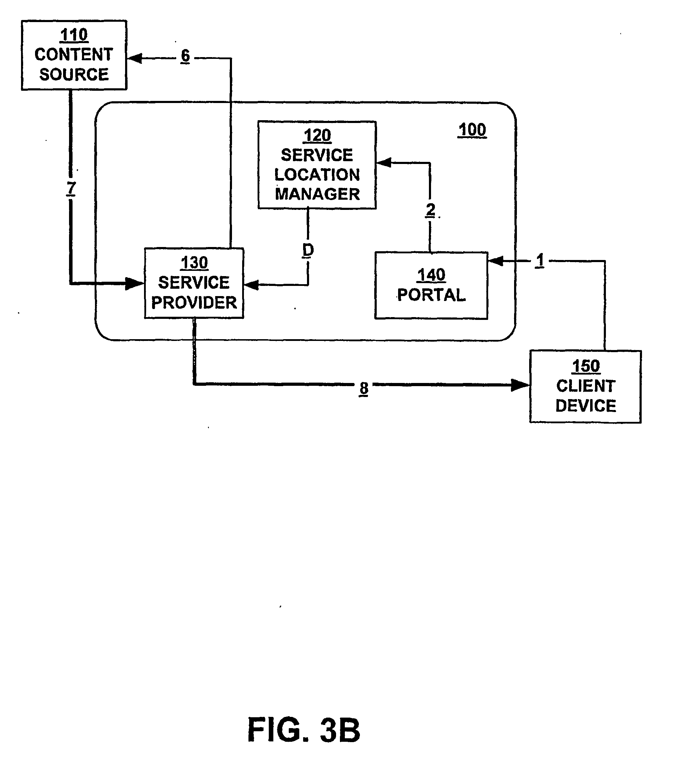

Furthermore, message D can be used in lieu of messages 3, 4 and 5 as illustrated in Figure 3B. For instance, in addition to identifying the item of content and perhaps the content source, message D can also include information enabling service provider 130 to establish communication with client device 150. In other words, instead of having client device 150 initiate the transfer of communication from portal 140 to service provider 130, the transfer of communication can be initiated by service provider 130 in a manner that remains seamless and transparent to a user of client device 150.

As discussed with reference to Figure 1, messages A, and B (of Figure 3) represent the resource monitoring communications that are transmitted or received by SLM 120. These messages are represented in Figure 3 by dashed double headed arrows A, B and C. These messages can constitute either a poll-based transmission of a request to a service provider, a push-based transmission of information regarding the resource availability of a service provider to the SLM 120, or a combination of both.

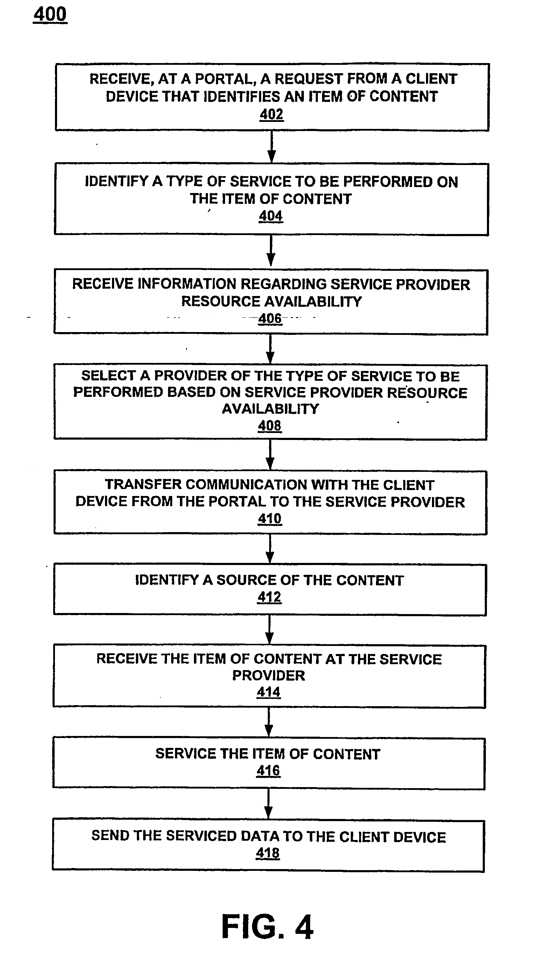

Figure 4 is a flowchart 400 of a method for servicing and delivering service result content according to one embodiment of the present invention. Although specific steps are disclosed in flowchart 400, such steps are exemplary. That is, embodiments of the present invention are well suited to performing various other steps or variations of the steps recited in flowchart 400. It is appreciated that the steps in flowchart 400 may be performed in an order different than presented, and that not all of the steps in flowchart 400 may be performed.

All of, or a portion of, the methods described by flowchart 400 can be implemented using computer-readable and computer-executable instructions which reside, for example, in computer-usable media of a computer system or like device. In the present embodiment, flowchart 400 is implemented by system 100 of Figures 1-3. That is, some of the steps recited in flowchart 400 are performed by portal (e.g., 140), others by service location manager (e.g., SLM 120), and yet others by service provider (e.g., 130, 132, and 230) of Figures 1-3.

In step 402 of Figure 4, during a session with a client device, a portal receives a request from the client device, identifying an item of content. The request can include other information. In one embodiment, with reference to Figures 1 and 2, portal 140 receives message 1 from client device 150.

In step 404 of Figure 4, a type of service to be performed on the item of content is identified. The type of service can be identified in the request of step 402, or it can be derived based on information provided in that request. Referring to Figures 1 and 3, the type of service can be identified by the client device 150, by the portal 140, or by the service location manager 120.

In step 406 of Figure 4, information regarding current resource availability is received from a plurality of service providers. The information is ascertained from ongoing resource measurements. The resource measurements that are received can include both poll-based and push-based data. According to one embodiment, the selection can be made based on a combination of poll-based and push-based data. This approach allows the service location manager to adapt its selection of a service location (e.g., service provider) to coincide with available resources.

In step 408 of Figure 4, a provider of the type of service is selected from a number of providers capable of performing the service. In one embodiment, with reference also to Figures 1 and 3, a service provider (e.g., service provider 130, etc.) is selected by SLM 120. As mentioned above, The SLM 120 can use either poll-based or push-based resource availability information that allows the service location manager to adapt its selection of a service location (e.g., service provider) to coincide with available resources.

In addition, the SLM 120 can select a service provider at random or using a scheme such as a round-robin scheme. Alternatively, SLM 120 can maintain a record that reflects which of the service providers other sessions have been transferred to. In this latter approach, SLM 120 selects a service provider based on the information in the record.

In step 410 of Figure 4, communication with the client device is transferred from the portal to the selected service provider. In other words, the session is transferred from the portal to the selected service provider.

In step 412 of Figure 4, a source of the item of content is identified. Referring to Figures 1 and 3, the source of the item of content can be identified by the client device 150, by the portal 140, by the SLM 120, or by the selected service provider (e.g., service provider 130). The content source is then contacted to begin delivery of data for the item of content to the selected service provider.

In step 414 of Figure 4, the item of content is received by (e.g., streamed to) the selected service provider.

In step 416, the item of content is serviced according to the specified type of service. Data constituting the item of content can be serviced as the data are received at the service provider, or the data can be cached before servicing. As mentioned above, an item of content may have been serviced, may be in the process of being serviced, may not be serviced, or may not yet be serviced. Servicing of an item of content can include the analysis or processing of an item of content. Service result content may consist of: a modified version of the original serviced item of content (e.g., when background removal is applied to a video stream); an item of content that is derived from the original item of content (e.g., when optical character recognition is used to produce text output); an item of content that is passed through a service provider and is not modified but merely forwarded (e.g., content that does not require transcoding when received by a transcoding service provider); or an item of content that has been previously sent to a service provider and is now cached/stored on the service provider (e.g., content that was previously serviced and is now stored in memory at the service provider). Additionally, service result content may consist of any combination of the above examples.

In one embodiment, the service is executed continuously by the service provider. In another embodiment, the service is not set up or does not start operating until the client device establishes communication with the service provider. In yet another embodiment, the service is set up and/or starts up after the service provider is identified by the service location manager, before the client device establishes communication with the service provider. For example, with reference to Figures 3A and 3B, after SLM 120 selects service provider 130 as a provider of the specified type of service, a message A is sent to service provider 130, causing service provider 130 to set up and/or start up the service.

In step 418 of Figure 4, the service result content is sent (e.g., streamed) to the client device. The data constituting the service result can be sent as the input data are serviced, or the service result data can be cached before it is sent.

The steps 414, 416 and 418 can be performed concurrently. That is, the selected service provider (e.g., service provider 130 of Figures 1 -3) can begin servicing the item of content before the entire item of content is received at service provider 130, and service result data can begin to flow out of service provider 130 before the servicing of the entire item of content is completed. Similarly, the servicing of one portion of an item of content can be in progress while the result of servicing another portion of the item of content is being received by the client device.

Once the service result content is delivered to client device 150 (Figures 1 and 3), the session can be terminated. It should be appreciated that a service session may be terminated upon the completion of a service session or prior to the completion of a service session where the requested tear down of the service session has been made. In an embodiment in which SLM 120 keeps some sort of record of providers that have been assigned sessions, the record can be updated once the session is terminated or once a service provider has serviced an item of content. Approaches for updating the record have been described above.

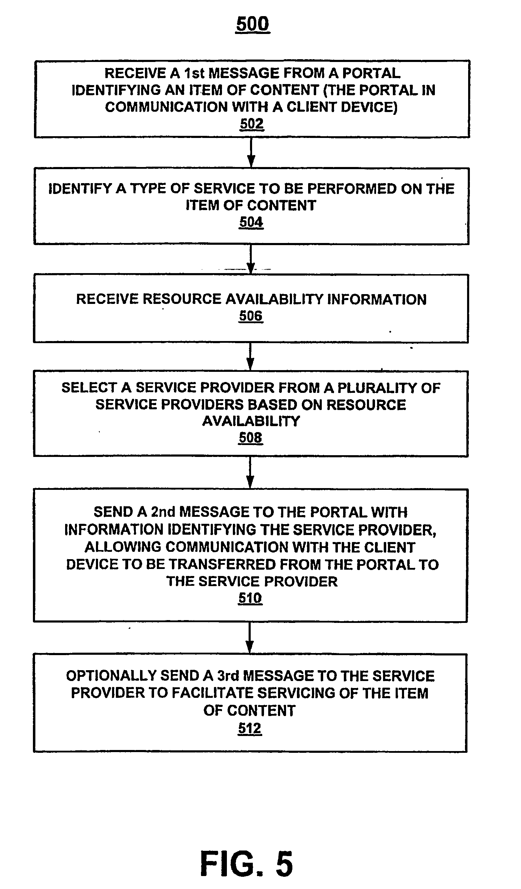

Figure 5 is a flowchart 500 of a method for managing the servicing of content according to one embodiment of the present invention. Although specific steps are disclosed in flowchart 500, such steps are exemplary. That is, embodiments of the present invention are well suited to performing various other steps or variations of the steps recited in flowchart 500. It is appreciated that the steps in flowchart 500 may be performed in an order different than presented, and that not all of the steps in flowchart 500 may.be performed.

All of, or a portion of, the methods described by flowchart 500 can be implemented using computer-readable and computer-executable instructions which reside, for example, in computer-usable media of a computer system or like device. In the present embodiment, flowchart 500 is implemented by system 100 of Figures 1-3. Specifically, flowchart 500 is implemented by service location manager 120 of Figures 1-3.

In step 502 of Figure 5, referring also to Figures 1 and 3, a first message (e.g., message 2) is received from portal 140, identifying an item of content. Portal 140 is in communication with client device 150.

In step 504 of Figure 5, a type of service to be performed on the item of content is identified. The type of service can be identified in the message of step 502. Referring to Figures 1 and 3, the type of service can be identified by the client device 150, by the portal 140, or by the service location manager 120.

In step 506 of Figure 5, information regarding current resource availability is received from a plurality of service providers. The information is ascertained from ongoing resource measurements. The resource measurements that are received can include both poll-based and push-based data. According to one embodiment, the selection can be made based on a combination of poll-based and push-based data. This approach allows the SLM 120 to adapt its selection of a service location (e.g., service provider 130) to coincide with available resources.

In step 508 of Figure 5, referring also to Figures 1 and 3, a provider of a type of service to be performed on the item of content is selected (e.g., service provider 130 is selected). Approaches for selecting a service provider have been previously described herein.

In step 510 of Figure 5, in one embodiment, a second message (e.g., message 3 of Figures 1 and 3) is sent to the portal. In another embodiment, the second message is sent to the client device, bypassing the portal. The second message includes information that identifies the selected service provider, allowing communication between the client device to be transferred from the portal to the service provider (e.g., from portal 140 to service provider 130 of Figures 1 and 3).

In step 512 of Figure 5, in one embodiment, a third message (e.g., message D of Figures 3A and 3B) is sent to the selected service provider. The third message can include the identity of the item of content and/or the identity of the content source. The third message can also be used to alert the service provider, allowing the service provider to begin setting up and/or executing the service (if the service is not already executing). In response to the third message, the service provider can also contact the content source, to initiate delivery (e.g., streaming) of the item of content from the content source to the service provider. In lieu of a third message, the activities just described can begin in response to the client device and the service provider establishing communication. Service result content is then sent (e.g., streamed) from the service provider to the client device.

In summary, embodiments of the present invention provide methods and systems that can provide services to a large number of diverse client devices. A variety of services are provided to accommodate the preferences and requirements of the diverse clients. To avoid congestion, the services are provided by a number of service providers managed by a service location manager. Items of content requested by the client devices are directed to the service providers for servicing based on service provider resource availability. However, the client devices need only contact a well-published portal site to begin a session and to request items of content. The client devices are automatically and transparently transferred to the appropriate service provider during the session. From the perspective of the client device, there is a single point of contact. Transparent to the client device is the flow of messages and data through the content delivery system that results in the delivery of service result content to the client device via a service provider selected by the system. Transparent to the end user at the client device is the seamless transfer of the session from the initial point of contact to the selected service provider.

The foregoing descriptions of specific embodiments of the present invention have been presented for purposes of illustration and description. They are not intended to be exhaustive or to limit the invention to the precise forms disclosed, and it is evident many modifications and variations are possible in light of the above teaching. The embodiments were chosen and described in order to best explain the principles of the invention and its practical application, to thereby enable others skilled in the art to best utilize the invention and various embodiments with various modifications as are suited to the particular use contemplated. It is intended that the scope of the invention be defined by the Claims appended hereto and their equivalents.

## Claims

1. A method of service location management for streaming media, said method comprising:
identifying (404) a type of service to be performed on an item of streaming content, wherein said item of streaming content is identified during a session with a client device (150);
receiving (406) resource availability information from a plurality of service providers (130, 132), wherein said information is ascertained from ongoing resource measurements;
selecting (408) a service provider from said plurality of service providers (130, 132) that is capable of performing said service based on said resource availability information; and
providing (410) information for transferring said session to said service provider (130, 132), wherein said service provider (130, 132) performs said service on said item of streaming content, **characterized in that**
the method further comprises receiving push-based resource availability information along with session startup/teardown information, and periodically polling service providers (130, 132) if said resource availability information is not received in a predetermined period of time.

2. The method of claim 1 wherein said resource availability information received is from a group that includes poll-based and push-based.

3. The method of claim 1 wherein said resource availability information is a combination of poll-based and push-based information.

4. The method of claim 1 wherein said receiving is from a periodic push of resource availability information from said service providers.

5. The method of claim 1 wherein push-based resource availability information is received if session startup/teardown information is not received in a predetermined period of time.

6. The method of claim 1 wherein said selecting comprises:
maintaining a record of providers to which sessions have been transferred; and
selecting said service provider based on said record and said information that is received.

7. The method of claim 1 wherein said currently available resources comprise the number of free compute cycle and the amount of free memory available at a given point in time.

8. The method of claim 7 wherein currently available resources further comprises an estimate of the amount of free network bandwidth available to a content server and to said client.

9. The method of claim 1 wherein said streaming content is serviced and delivered to a client device as it is received.

## Patentansprüche

1. Ein Verfahren zur Dienstpositionsverwaltung für Streaming-Medien, wobei das Verfahren folgende Schritte aufweist:
Identifizieren (404) eines Diensttyps, der an einem Element eines Streaming-Inhalts durchgeführt werden soll, wobei das Element eines Streaming-Inhalts während einer Sitzung mit einer Clientvorrichtung (150) identifiziert wird;
Empfangen (406) von Ressourcenverfügbarkeitsinformationen von einer Mehrzahl von Dienstanbietern (130, 132), wobei die Informationen aus laufenden Ressourcenmessungen ermittelt werden;
Auswählen (408) eines Dienstanbieters aus der Mehrzahl von Dienstanbietern (130, 132), der zum Durchführen des Dienstes in der Lage ist, basierend auf den Ressourcenverfügbarkeitsinformationen; und
Liefern (410) von Informationen zum Übertragen der Sitzung auf den Dienstanbieter (130, 132), wobei der Dienstanbieter (130, 132) den Dienst an dem Element eines Streaming-Inhalts durchführt, **dadurch gekennzeichnet, dass**
das Verfahren ferner ein Empfangen von Push-basierten Ressourcenverfügbarkeitsinformationen zusammen mit Sitzungsbeginn-/-beendigungsinformationen und ein regelmäßiges Abfragen von Dienstanbietern (130, 132) aufweist, falls die Ressourcenverfügbarkeitsinformationen nicht in einem vorbestimmten Zeitraum empfangen werden.

2. Das Verfahren gemäß Anspruch 1, bei dem die Ressourcenverfügbarkeitsinformationen, die empfangen werden, aus einer Gruppe stammen, die Poll-basiert und Pushbasiert umfasst.

3. Das Verfahren gemäß Anspruch 1, bei dem die Ressourcenverfügbarkeitsinformationen eine Kombination von Poll-basierten und Push-basierten Informationen sind.

4. Das Verfahren gemäß Anspruch 1, bei dem das Empfangen aus einem regelmäßigen Push von Ressourcenverfügbarkeitsinformationen von den Dienstanbietern erfolgt.

5. Das Verfahren gemäß Anspruch 1, bei dem Push-basierte Ressourcenverfügbarkeitsinformationen empfangen werden, falls in einem vorbestimmten Zeitraum keine Sitzungsbeginn-/-beendigungsinformationen empfangen werden.

6. Das Verfahren gemäß Anspruch 1, bei dem das Auswählen folgende Schritte aufweist:
Beibehalten einer Aufzeichnung von Anbietern, an die Sitzungen übertragen wurden; und
Auswählen des Dienstanbieters basierend auf der Aufzeichnung und den Informationen, die empfangen werden.

7. Das Verfahren gemäß Anspruch 1, bei dem die gegenwärtig verfügbaren Ressourcen die Anzahl von freien Rechenzyklen und die Menge an freiem Speicher aufweisen, die zu einem gegebenen Zeitpunkt verfügbar sind.

8. Das Verfahren gemäß Anspruch 7, bei dem gegenwärtig verfügbare Ressourcen ferner einen Schätzwert der Menge an freier Netzwerkbandbreite aufweisen, die einem Inhaltsserver und dem Client verfügbar ist.

9. Das Verfahren gemäß Anspruch 1, bei dem der Streaming-Inhalt bedient wird und an eine Clientvorrichtung geliefert wird, wie derselbe empfangen wird.

## Revendications

1. Procédé de gestion d'emplacement de services pour supports d'informations de flux, ledit procédé consistant à :
■ identifier (404) un type de service à effectuer sur un article de contenu de flux, dans lequel ledit article de contenu de flux est identifié durant une session avec un dispositif client (150) ;
■ recevoir (406) des informations de disponibilité de ressource à partir d'une pluralité de fournisseurs de services (130, 132), où lesdites informations sont vérifiées à partir de mesures de ressource en cours ;
■ sélectionner (408) un fournisseur de services parmi ladite pluralité de fournisseurs de services (130, 132) qui est capable d'effectuer ledit service sur la base desdites informations de disponibilité de ressources ; et
■ fournir (410) des informations pour transférer ladite session audit fournisseur de services (130, 132), où ledit fournisseur de services (130, 132) effectue ledit service sur ledit article de contenu de flux, **caractérisé en ce que**
le procédé consiste en outre à recevoir des informations de disponibilité de ressource à base de poussé conjointement à des informations de lancement/rupture de session et interroger périodiquement des fournisseurs de services (130, 132) si lesdites informations de disponibilité de ressource ne sont pas reçues dans une période de temps prédéterminée.

2. Procédé selon la revendication 1, dans lequel lesdites informations de disponibilité de ressource reçues sont parmi un groupe qui comprend à base de poussé et à base d'appel.

3. Procédé selon la revendication 1, dans lequel lesdites informations de disponibilité de ressource sont une combinaison d'informations à base de poussé et à base d'appel.

4. Procédé selon la revendication 1, dans lequel ladite réception est à partir d'un poussé périodique d'informations de disponibilité de ressource de la part desdits fournisseurs de service.

5. Procédé selon la revendication 1, dans lequel des informations de disponibilité de ressource à base de poussé sont reçues si des informations de lancement/rupture de session ne sont pas reçues dans une période de temps prédéterminée.

6. Procédé selon la revendication 1, dans lequel ladite sélection consiste à :
■ maintenir un enregistrement de fournisseurs auxquels des sessions ont été transférées; et
■ sélectionner ledit fournisseur de services sur la base dudit enregistrement et desdites informations qui sont reçues.

7. Procédé selon la revendication 1, dans lequel lesdites ressources actuellement disponibles comprennent le nombre de cycles de calcul libres et la quantité de mémoire libre disponibles à un instant donné.

8. Procédé selon la revendication 7, dans lequel lesdites ressources actuellement disponibles comprennent en outre une estimation de la quantité de largeur de bande libre de réseau disponible pour un serveur de contenus et pour ledit client.

9. Procédé selon la revendication 1, dans lequel ledit contenu de flux est contrôlé et délivré à un dispositif client tel qu'il est reçu.
